# EUROPEAN PATENT SPECIFICATION

(11) **EP 1 725 359 B1**
(45) Date of publication and mention of the grant of the patent: **18.01.2017**
(21) Application number: 04733705.0
(22) Date of filing: 18.05.2004
(51) Int. Cl.: B23B 51/04

(54) **TOOL CHANGE ARBOR SYSTEM**
SPANNDORNSYSTEM ZUM WERKZEUGWECHSEL
SYSTEME D'ARBRE DE MONTAGE DE CHANGEMENT D'OUTIL

(30) Priority: 17.01.2004 EP 04075048
(43) Date of publication of application: 29.11.2006
(73) Proprietor: A.V. Custom style B.V., 2727DC Zoetermeer (NL)
(72) Inventor: GILLISSEN, Hubert, NL-2727 DC Zoetermeer (NL)
(74) Representative: Klavers, Cornelis
(86) International application number: PCT/NL2004/000346
(87) International publication number: WO 2005/068119

(56) References cited:
- WO-A-01/38028
- WO-A-03/024677
- DE-U- 20 113 578
- GB-A- 2 295 110
- US-A- 5 076 741
- US-A- 5 082 403
- US-A- 5 226 762
- US-A1- 2001 001 276
- US-A1- 2002 037 201
- PATENT ABSTRACTS OF JAPAN vol. 2000, no. 20, 10 July 2001 (2001-07-10) -& JP 2001 062783 A (HOUSE BM:KK), 13 March 2001 (2001-03-13)
- PATENT ABSTRACTS OF JAPAN vol. 016, no. 287 (M-1271), 25 June 1992 (1992-06-25) -& JP 04 075813 A (MIYANAGA:KK), 10 March 1992 (1992-03-10)

## Description

The invention involves a quick-change arbor for a hole-saw, a hole-saw and a combination of the quick-change arbor and the hole saw.

In order to drill larger holes into a certain material, one could use a hole-saw instead of a twist drill or a milling cutter. A hole-saw consists of a cylindrical saw cup with a toothed edge along the front annular surface of the saw cup body. The advantage of a hole-saw in relation to a twist drill is that a hole-saw doesn't have to chip the entire hole, and therefore uses less energy. The hole-saw can be used both dry and wet, and can cover various indeterminate drill diameters.

A special interchangeable arbor goes with the hole-saw. This interchangeable arbor can be placed in a drill-chuck. One can place and also change the hole-saw on this interchangeable arbor. The interchangeable arbor is usually provided with a pilot drill that initially serves to stabilise and centre the hole-saw at the initial entry. Used in a stable formation as, e.g., a drill frame, this pilot drill could possibly be left off. When the hole is sawn a plug of material stays behind in the core of the hole-saw that can be pried out through grooves in the side of the hole-saw by using a sharp object. The quick-change arbor as e.g. known from US-A1-2001/0001276 for example, consists of a connection device fitted with a screw thread, a ring with two pins and a nut. Once the hole-saw is screwed onto the connection device and is positioned properly in relation to the two pins, one can secure the connection device and the hole-saw in relation to each other with the nut. This prevents the connection device and the hole-saw from working loose from each other.

The above described procedure of placing, and or changing, of the hole-saw on the connection device is a time-consuming activity.

After placing the hole-saw on the connection device no stable connection between the connection device and the hole-saw is generated since play in the screw thread is inevitable.

Additionally, removing the sawn plug from the hole-saw is often a very hard and time consuming activity. By prying the plug out through the grooves in the side of the hole-saw, the plug in the hole-saw will in fact get tilted, so that pushing it out becomes very difficult.

With less professionally constructed hole-saws it even is necessary to disassemble the entire hole-saw in order to be able to remove the plug of sawn material.

Another quick-change arbor is known from US-A1-2002/0037201. With this quick-change arbor the sawn plug can be pressed out of the hole-saw through the sawing end of the quick-change arbor by a screw thread on the drive shaft of the quick-change arbor. This quick-change arbor, however, is very complex in construction, whereby, for removing the plug, the drills' rotation direction has to be turned around, which is cumbersome.

US-5,082,403, from which the independent claims are delimited, discloses a quick-change arbor having the features of the preamble of claim 1 and a hole saw having the features of the preamble of claim 9.

Apart from the features in the preambles of those claims the document like the above one describes specifically a kind of double sliding movement realised by at the one hand by a rotating of threaded flange 44 and threaded mandrel shaft 54 relative to one another, resulting in a slow forward sliding movement at the other hand of a plug or core of sawn material out of the hole saw. This also suffers from the above mentioned disadvantages.

Accordingly, the invention concerns a quick-change arbor and a hole-saw, that do not have the above-mentioned disadvantages, having the features of claims 1 and 9 respectively.

The invention consists of a quick-change arbor on which a hole-saw can be placed and interchanged easily and quickly. At the same time the invention ensures a stable connection between connection device and hole-saw.

The invention also provides for the possibility of pushing the sawn plug of material that stays behind in the hole-saw after drilling a hole out of the hole-saw in a truly linear manner. That is that the plug is pushed out of the hole-saw under the same angle as it entered the hole-saw.

Furthermore, an interchangeable arbor according to the invention has a simpler construction, which makes the interchangeable arbor according to the invention cheaper to produce. Additionally, the simplicity of the construction will contribute to the reliability of the quick-change arbor. The ability to quickly interchange the hole-saw and simply remove the sawn plug will ensure a quicker and therefore more economical working method.

Furthermore, the invention provides for a hole-saw for use with the quick-change arbor according to the invention.

Both the axial (= longitudinal/lengthwise) and the rotational (= angular/circumferential/tangential) forces are absorbed by an elastically loaded latch on the quick-change arbor and a specially placed flange on the hole-saw.

At the same time if desired the quick-change arbor may serve, after pressing the latch (through which the quick- change arbor and the hole-saw are unbolted with respect to each other), as a driving body to push the plug of material out of the hole-saw. To drive out the plug, the hole-saw is slid manually downwards over the quick-change arbor. Consequently the possibly rejuvenated pilot drill, or the end of the interchangeable arbor will push the plug out of the hole-saw. Hereby, the latch on the interchangeable arbor as well as the flange on the hole-saw ensures an exact positioning of the interchange arbor and the hole-saw with respect to each other. After having pushed the plug out, the hole-saw and the interchangeable arbor can easily be returned to the working position by sliding the hole-saw back along the interchangeable arbor to the point where the spring-loaded latch secures the hole-saw. Another advantage of the quick-change arbor according to the invention is that the cup base of the hole-saw can be thinner than the one of the known hole-saw, because in the invention there is no screw thread in the cup base cup for attaching the hole-saw to the quick-change arbor, but a flange is used instead.

Applying various diameters of quick-change arbores for hole-saws with various diameters may be desirable.

The latch in the quick-change arbor is proportioned in such a way that it can satisfactorily absorb both the rotational and axial forces. The length of the latch and arbor are determined by how far one wishes the plug to be pushed out of the hole-saw.

As pivot point of the spring-loaded latch, a true centre of rotation, with which this invention is placed in the latch, a cam or another tilt mechanism can also serve as centre of rotation. The spring-loaded element that is applied in the quick-change arbor to make the latch spring can be made of spring steel or any other elastic medium. The location where this spring-loaded element must be placed is not specifically determined, but has to be positioned in such a way that satisfactory locking and unlocking action of the quick-change arbor and hole-saw remains guaranteed.

The latch itself can also partially or fully be made of an elastic material as, e.g., spring steel. In this case rotational attachment of the latch in the quick-change arbor becomes redundant and thus the latch can be set straight up in the groove in the quick-change arbor. If the latch consists partially of elastic material, the elastic part can be attached to the fixed part of the latch, e.g., through spot welding, gluing or sticking. In such a case, the elastic part needs to be fixed in the quick-change arbor. By using such a design of the spring-loaded latch the interchangeable arbor is further simplified, because a separate elastic component and pivot point will no longer be necessary.

The invention is further illustrated by the attached drawings which show examples of embodiments, in which:
Figure 1A: a three dimensional drawing of a quick-change arbor with hole-saw according to the invention.
Figure 1B: a three dimensional drawing of another embodiment of a quick-change arbor with hole-saw according to the invention.
Figure 2A, 2B: cross sections of an interchangeable arbor with hole-saw according to the invention, in operation and in the position after the removal of the drill plug, respectively.
Figure 3: cross section of a quick-change arbor according to the invention.
Figure 4: cross section of another embodiment of a quick-change arbor according to the invention.
Figure 5: cross section of a quick-change arbor according to the invention especially suitable for hole-saws of smaller diameter.
Figure 6a: three-dimensional reproductions of a spring-loaded latch for a quick-change arbor according to the invention.
Figure 6b: side view of a spring-loaded latch for a quick-change arbor according to the invention.
Figure 7: a three dimensional reproduction of hole saw according to the invention with an adapter.

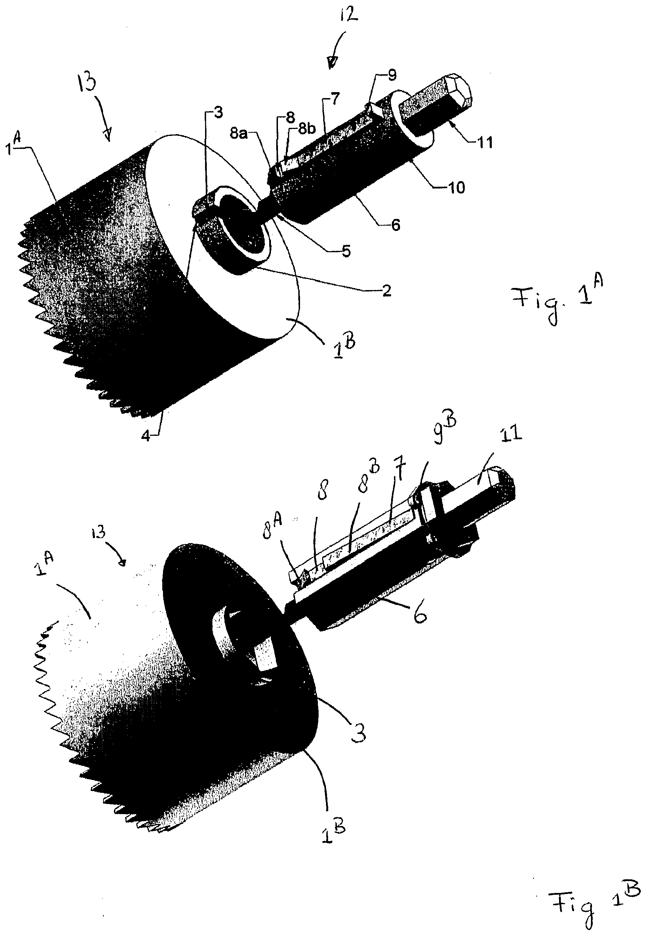

In figure 1A an embodiment of a quick-change arbor 12 and a hole-saw 13 according to the invention is shown.

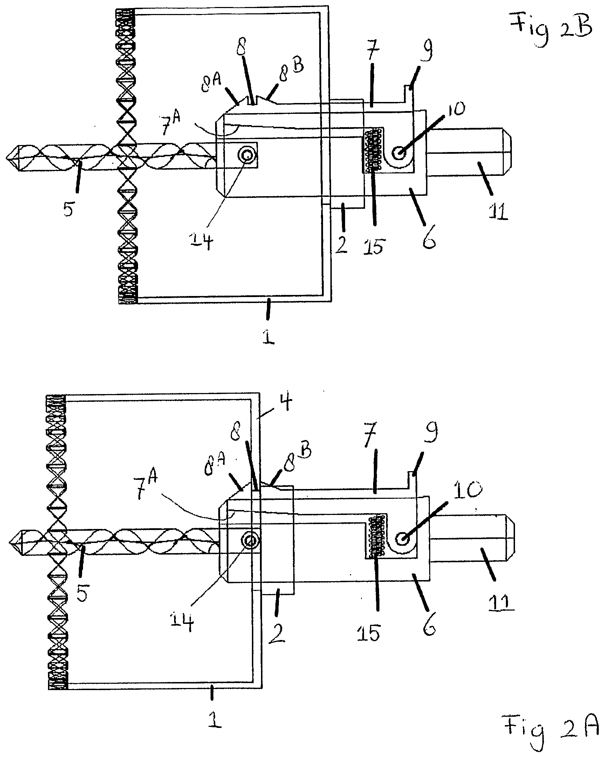

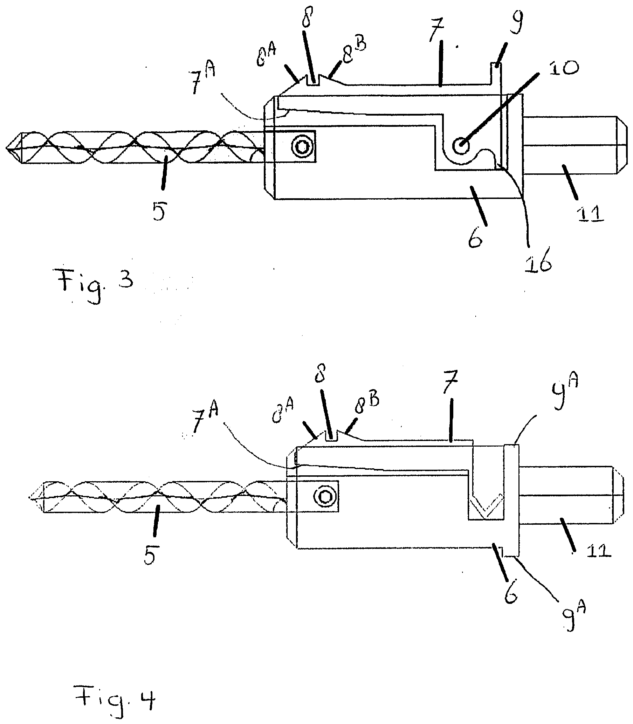

The quick-change arbor consists primarily of a longitudinal body 6, in which a radial groove coaxial is applied over almost the entire length. In this groove a spring-loaded latch 7 is applied over almost the entire length of the longitudinal body 6, in such a manner that this can rotate around an axis 10, applied close to the spindle side end of the longitudinal body 6. As can be seen in figure 2A, this latch is ejected out of the groove by the spiral spring 15. Instead of a spiral spring, it is of course also possible to use another kind of elastic component, such as a leaf spring or a piece of foam rubber. In the embodiment shown in figures 2A and B the spiral spring 15 is applied close to the pivot point of the latch. An elastic component can, however, also be applied at a different place. Its shape restricts the movement of the spring-loaded latch out of the groove. Thus the back of the spring-loaded latch in figure 2A and 2B bounces against the back of the groove in the body of the quick-change arbor. In the embodiment shown in figure 3, the restriction of the movement is achieved by a caml6 at the bottom of the spring-loaded latch.

Close to its free end the spring-loaded latch has a notch 8, the periphery to either side of which is bevelled 8a, 8b. At its other end the spring-loaded latch in the embodiment shown has a stop cam 9, as according to figure 1-3.

At the end of the longitudinal body close to the axis of the spring-loaded latch, the body 6 is provided with a drivable spindle 11 for attaching the quick-change arbor in a drill-chuck (not shown). The other end of the longitudinal body is provided with a hole, in which a pilot drill 5 can be placed if required, to prevent straying of the hole-saw and a-centric drilling at the initial entry. Preferred attachment for this pilot drill 5 to the longitudinal body of the quick-change arbor is by a clamping set screw 14. With this it is possible to use pilot drills of various lengths, if required. Besides, in this case the diameter of the pilot drill 5 is free and adaptable to the set mechanical requirements. In addition, if desired it is possible to eliminate the pilot drill 5 when it is not necessary, e.g., when drilling from a stable assembly. Besides the use of a set screw 14, a pilot drill 5 can also be mounted in the quick-change arbor by gluing or sticking. Desirable material for the longitudinal body and the latch is metal, preferably a metal that can be well hardened, e.g., tool steel.

However, if the required mechanical forces allow for it, other materials could also be applied for this, e.g., glass filled nylon.

The hole-saw 13 consists primarily of a cylindrical cup-shaped body that has a longitudinal cylindrical body 1a and a cup base1b. The end of the hole-saw is has a known toothed edge As sawing component it should also be possible to apply another cutting material and or form instead of a toothed edge. Hereby one can think of diamond or other cutting materials.

The cup base 1b has a central through hole. A flange 2 is centrally placed on or through the cup base 1b of the hole-saw, of which the inner diameter corresponds with the outer diameter of the longitudinal body 6 of the quick-change arbor, as well as with the hole in the cup base. In addition a groove 3 is applied over the full length of the flange, which corresponds to the width of the spring-loaded latch 7. The flange can form a whole (unit) with the hole-saw, as well as consist of a loose flange that is mounted on the hole-saw. A loose flange can eventually be attached to the hole-saw by gluing or welding, or also by a threaded connection. The flange on the hole-saw is made of a material that is able to absorb both axial and rotational forces. Desirable materials for the flange can hereby be various kinds of metal, either hardened or not. The flange can also be made of synthetic material, e.g., glass filled nylon. The height, width and depth of the flange can vary depending on the set mechanical requirements. Furthermore, the through hole in the cup base is provided with a notch 4 at the height of the groove in the flange.

The hole-saw 13 can be slid onto the longitudinal body 6 of the quick-change arbor with the support and guidance of the flange 2. Hereby one must take care of the correct positioning of the spring-loaded latch 7 in respect to the groove 3 in the flange 2 on the cup base 1b of the hole-saw. The working of the spring-loaded latch 7 in concert with the groove 3 ensures a rotational fixation of the hole-saw in respect to the quick-change arbor.

While sliding the hole-saw 13 onto the quick-change arbor 12, the spring-loaded latch 7 will be pressed downwards around the centre of rotation 10 in the groove of the longitudinal body 6 due to the bevelled periphery of 8a and will come to a stop against the rim of the notch 4 in the cup base 1b of the hole-saw and against a light elasticity.

Because the latch 7 is placed in the longitudinal body of the quick-change arbor 6 in an elastic manner, this latch will, as soon as the groove 8 arrives at the rim of the notch 4 in the cup base 1b of the hole-saw, spring outwards again, and thus lock the hole-saw 13 axially on the longitudinal body of the quick-change arbor 6.

Flange 3 of the hole-saw 13 and the body of the quick-change arbor 6 are, in regard to fit, proportioned in such a manner that a stable connection arises between the two components. It is conceivable that if the tolerance between the hole-saw and the quick-change arbor is deemed acceptable, the flange can be dispensed with and the quick-change arbor can be guided through a through hole in the upper side of the hole-saw. In this case a notch in the central hole in the cup base can provide for the necessary longitudinal fixation of the hole-saw.

When in use the latch 7 will, by its shape at least absorb the rotational forces and by its fit in the quick-change arbor 6 it will further absorb the axial forces. However, it is also conceivable that forms of the longitudinal latch body of the quick-change arbor and flange other than round could be used. Hereby semi-circular, triangular, square, pentagonal, hexagonal, etc. could be considered.

An embodiment of the invention is shown in figure 1B in which the longitudinal body 6 of the interchange arbor has a hexagonal form, as example of one of the possible embodiments of so called form closure between the body or tool end 6 and said hole or flange in the upper side of the material removing tool 13. With the application of such a shape, the rotational forces will be directly absorbed by the longitudinal body of the quick-change arbor and the hole or flange, so that this function doesn't need to be fulfilled by the spring-loaded latch 7. The latch can thus be designed in a lighter way.

At the same time the spring-loaded latch 7 needs to be shaped in such a manner that when pushed down, the upper side of the latch is fully countersunk in the groove. Instead of a stop cam on the spring-loaded latch, the longitudinal body of the quick-change arbor near its spindle side end is provided with a groove in which a retaining ring 9b is applied. This retaining ring 9b may also perform a function as stop cam 9. Of course it is possible to use another kind of clamping element instead of a retaining ring, e.g. an e-clip or a so called segerring.

After drilling a hole, a plug of sawn material will remain in the hole-saw 13. By pushing the spring-loaded latch 7, this latch will be pressed further into the groove in the body 6 of the quick-change arbor 12, through which the locking notch 8 liberates the rim of the notch 4 in the cup base 1b of the hole-saw, and the axial locking of the hole-saw in respect to the quick-change arbor will be lifted. The hole-saw 13 can now be moved from its working position over the longitudinal body 6 of the quick-change arbor 12 to the stop cam 9 to take its sliding position, through which the sawn plug that remained in the hole-saw 13 can be pushed upwards and thus can be easily removed from the hole-saw 13. If the pilot drill 5 has a diameter which narrows seen from its tip, then removal of the sawn plug from the hole-saw 13 is even more easy. The groove 3 and the notch 4 in the cup base of the hole-saw hereby ensure that during the rotational and axial movement respectively of the hole-saw over the quick-change arbor, this stays fixed. The spring loaded latch can axially unlock the hole-saw without being countersunk fully in the groove. The spring-loaded latch thereby continues to work in concert with the groove 3 in the raised rim 2 on the cup base 1b of the hole-saw. After the removing of the plug the hole-saw 13 can then be slid back again over the body 6 of the quick-change arbor 12 from its sliding or ejecting position to its working position. Hereby bevelled component 8b and notch 8 of the spring-loaded latch 7 ensure that the spring-loaded latch automatically locks itself in the cup base of the hole-saw. After this the hole-saw is ready again for use.

Likewise, after the pressing of the latch 7 and the axial unlocking of the hole-saw 13, the hole-saw and the quick-change arbor can easily be detached from each other. When the flange 2 is placed through the cup base this has the extra advantage that the hole-saw can be slid further over the longitudinal body of the quick-change arbor, without this happening at the cost of the stability of the connection between the hole-saw and the quick-change arbor. Preferably the flange 2 doesn't project more from the inner side than the distance from the notch 8 on the spring-loaded latch to the toothed end of the quick-change arbor. This will not influence the maximum drilling depth because a portion of the raised rim 2 is situated in the cylindrical body 1a of the hole-saw.

As can be seen in the figures 2A, 2B, 3 and 4, the underside of the spring-loaded latch 7 at the bottom of its free end is bevelled 7a. This has the advantage that the groove can be made less deep, because when the spring-loaded latch is pushed into the groove in order to unlock the hole-saw, it will not hit the bottom of the groove prematurely. Consequently, the construction will be more stable.

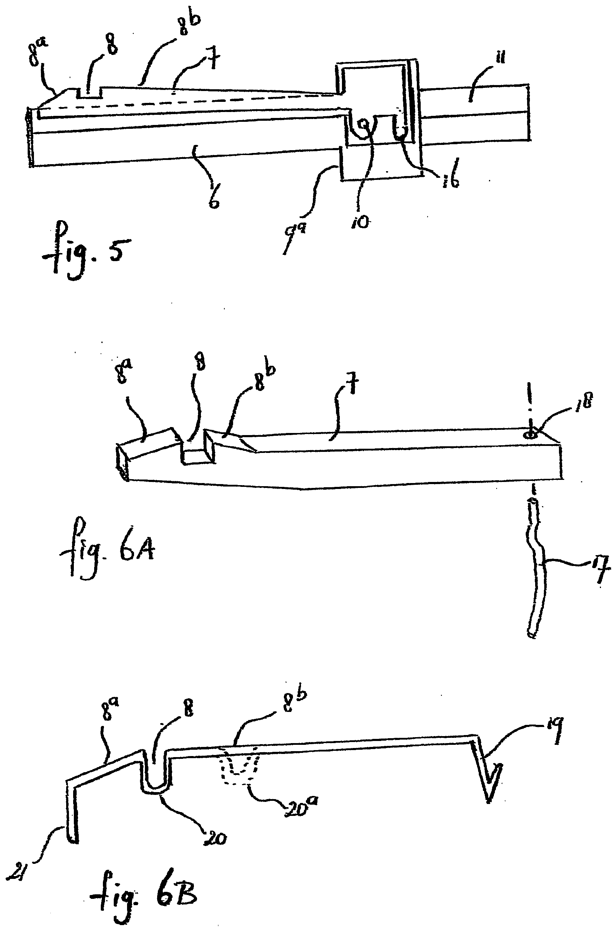

In figure 4 another embodiment of a quick-change arbor according to the invention is shown. The spring-loaded latch 7 in this embodiment is fully or partially made of spring steel. The rotary attachment of the latch in the quick-change arbor is now redundant and the latch can be mounted directly in the groove in the quick-change arbor. When the latch consists partially of elastic material, the elastic part can be attached to the fixed part of the latch, e.g., by spot-welding, gluing or sticking. The elastic part then needs to be mounted in the quick-change arbor. By using such a layout of the spring-loaded latch, the interchange arbor is even more simplified, because a separate elastic component and pivot point are no longer necessary. For the rest, the longitudinal body 6 of the quick-change arbor is provided at its spindle-side end with a stop flange 9a, against which the hole-saw will stop while removing the sawn plug. A stop cam the spring-loaded latch is hereby redundant, and the spring-loaded latch itself will allow itself to be pushed in more easily. In figure 6a another embodiment of a spring-loaded latch is shown. The latch here is formed by a relatively stiff longitudinal body, e.g., made of tool steel or fibreglass filled nylon. At one end the latch is provided with a notch 8, of which the periphery to either side is bevelled 8a, 8b. At the other end the latch is provided with a hole and/or groove, in which an end of a longitudinal piece of elastic material can be attached, preferably by sticking.

The spindle-sided end of the groove in the longitudinal body is now provided with a radial hole, in which the other end of the elastic piece of material is fixed so that the latch just projects just from the groove in the longitudinal body of the quick-change arbor. The longitudinal piece of elastic material could consist of a piece of round spring steel, but also, e.g., of a piece of flat spring steel. In this case, instead of a hole through the end of the latch, it is also possible to make a groove sideways in the latch, in which the longitudinal flat piece of spring steel can be stuck. In this way a spring-loaded latch can be produced extremely simply and cheaply.

Figure 4 also depicts that the spring urging the manually releasable locking means 7, instead of being provided internally, as spring 15, is now provided externally as a kind of band shaped spring 9b engaging around the body 6 of the arbor 12.

Yet another embodiment of a spring-loaded latch is shown in figure 6b. This latch is made of a piece of elastic material such as spring steel or certain synthetic materials, that is made in such a manner that near the one end a notch 8 is formed with a bevelled periphery 8a, 8b on either side. At the other end the latch is provided with assembly component 19 that is set up in a hole in the groove in the longitudinal body of the quick-change arbor. The bend 20 that forms the notch in the latch here serves as the fixation of the hole-saw in respect to the quick-change arbor as well. If required, several bends 20a can be formed in the latch (indicated by dotted lines) in order to be better able to absorb the forces. Furthermore, a guide component 21 can be formed at the end of the latch near the notch to guide the latch.

In figure 5 another embodiment of a quick-change arbor according to the invention is shown, that is especially for hole-saws with a small drill diameter or with an adapter.

This quick-change arbor corresponds roughly to the quick-change arbors described above.

The spindle-side end of the longitudinal body is thickened 9a, which part serves at the same time as stop flange. The longitudinal body is therefore more stable at the assembly holes in the longitudinal body for the spring-loaded latch. The latch is shaped so that when pushed, the upper side of the latch fully countersinks in the groove. An effect is that the hole-saw can rotate around the longitudinal body during the removal of the sawn plug.

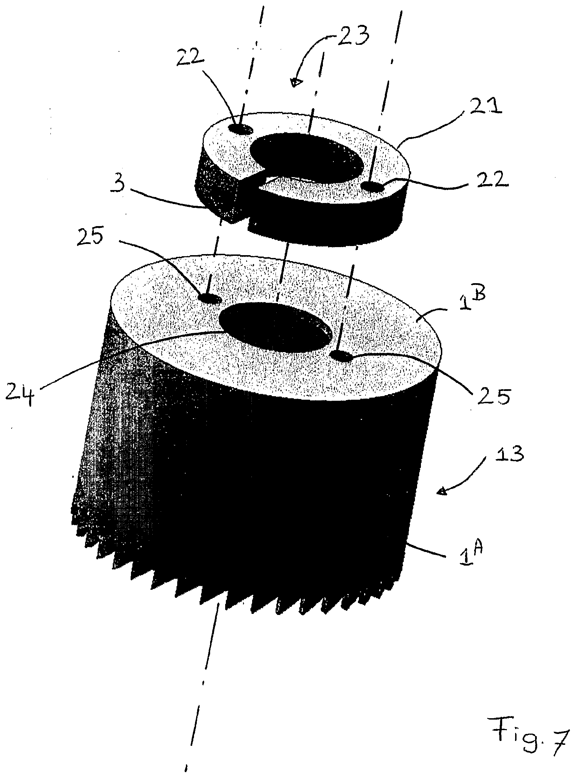

A preferred embodiment of a hole saw according to the invention with an adapter is shown in figure 7.

The hole-saw 13 consists mainly of a cylindrical cup-shaped body, provided with a longitudinal cylindrical body 1a and a cup base 1b. The end of the hole-saw is has a toothed edge. The cup base 1b is provided with a hole 24, which, depending on the type, is smooth or threaded. Furthermore, the cup base is provided with holes 25 for fixation of the hole-saw with an interchange arbor meant for this. The adapter 23 consists of a collar body that is provided with two fixing holes 22 with the same pitch size as the fixation holes 25 in the cup base of the hole-saw. Of course the collar body can also have an L-shaped cross-section. Furthermore, the collar body can be provided with a through groove 3. However, this is not necessary, especially when a quick-change arbor is used as shown in figure 1B. The inner diameter and the inner form closed shape of the collar correspond to the size and contour of the longitudinal body 6 of the quick-change arbor to be used, but have to remain within the dimensions of the present hole 24 in the cup base 1b of the existing hole-saw. This way any tool, especially material removing tool-and not only a hole-saw 13-, can be exchanged, either or not through the use of the adapter 23, which tool can then manually be released, that is locked onto or unlocked from an arbor 12. Such a tool may be even a cutter, a circular saw, a drill, a polishing disc or layer, a brush, a bore tool, a grinding stone or the like, in order to create a multipurpose tool change system. In these cases the manually releasable locking means in the form of the above described latch 7 is arranged for longitudinally and rotationally holding the tool, whereby the tool is locked to the tool end.

The adapter can be set up at the outside or inside of the existing hole-saw with screws (not shown). After mounting the adapter on the hole-saw, it can be used in the same way as the hole-saw as already described above.

The tool change arbor system could have latches as described above, which may be provided on both sides of the arbor body 6 in associated radial/longitudinal grooves.

Although the invention has been described by reference to certain preferred embodiments, modifications and variations will be apparent without departing from the scope of the invention as defined in the appended claims.

## Claims

1. Quick-change arbor (12) for a hole-saw (13) comprising a body (6) provided at one end
with a drive shaft (11) for insertion in a drill chuck, whereby at its opposite end the body is provided with means for attaching the hole-saw, whereby the body (6) has a mainly constant shape over its longitudinal length, such that a hole-saw can be slid along the length of the longitudinal body, whereby said body (6) is provided with first (7) and second means (7, 8) to fix the hole-saw at least close to said opposite end of the body (6) rotationally and axially respectively, whereby at least the second means are operable in such a manner that they can be moved from a hole-saw axially locking position into a hole-saw axially unlocking position, to allow for the sliding of a hole-saw over the body of the quick-change arbor, **characterised in that** the body (6) of the quick-change arbor (12) is provided with a longitudinal groove over almost its entire length and that the said first and second means consist of a latch (7) which is mounted in said groove biased elastically radially to the outside and that said latch (7) is provided with a notch (8).

2. Quick-change arbor according to claim 1, **characterised in that** the latch (7) is rotatably mounted in the groove around an axis (10) in the groove near the first end of the longitudinal body of the quick-change arbor, and is urged radially to the outside by an elastic element (15).

3. Quick-change arbor according to claim 1, **characterised in that** the latch (7) consists of an elastic element which is mounted in the groove of the body of the quick-change arbor.

4. Quick-change arbor according to one of the claims 1-3, **characterised in that** the end of the latch (7) is bevelled (8a, 8b) on either side of the notch (8).

5. Quick-change arbor according to one of the claims 1-4, **characterised in that** the underside of the latch (7) is fully or partially bevelled (7a).

6. Quick-change arbor according to one of the claims 1-5, **characterised in that** the latch (7) is mounted in the groove in the longitudinal body of the quick-change arbor in such a manner that it countersinks fully in the longitudinal body (6) of the quick-change arbor under influence of a radial axis-directed force, and without such a force exerted on the latch, at least around the notch (8), projects from said groove for the axial locking of a hole-saw in use placed on the quick-change arbor (12).

7. Quick-change arbor according to one of the preceding claims **characterised in that** the longitudinal body (6) of the quick-change arbor is provided with stop means (9, 9a, 9b) which limit the sliding motion of a hole-saw over the longitudinal body of the quick-change arbor towards the drive shaft.

8. Quick-change arbor according to the preceding claim, **characterised in that** the stopping mechanism is formed by a clamping ring, preferably a retaining ring or an e-clip, applied in a groove near the first end of the longitudinal body (6) of the quick-change arbor.

9. Hole-saw (13) for use with a quick-change arbor (12) according to one of the preceding claims consisting of a mainly cylindrical cup-shaped body provided with a longitudinal cylindrical body (1a) and a cup base (1b) provided with a central hole corresponding with the shape of the body (6) of the quick-change arbor (12), so that it can be fittingly slid over the quick-change arbour, and a flange (2) of which the inner shape corresponds with the central through-hole in the cup base (1b), which flange (2) is centrally mounted on or through the cup base, **characterised in that** the shape of the central hole and the inner shape of the flange (2) are round, semi-circular, triangular, square, pentagonal, or hexagonal, and allow a fittingly linear sliding of the flange (2) over the quick-change arbor (12), that the flange (2) is provided at the inside with a groove (3), the groove (3) extending over the whole length of the flange (2) in a direction perpendicular to the cup base (1b), and that the cup base (1b) is provided with a notch (4) at the location of the groove (3), the notch (4) being suitable to cooperate with means on the quick-change arbor (12) in order to fix the hole-saw (13) against movement.

10. Hole saw according to claim 9, which comprises an adaptor (23) consisting of a collar shaped body (21) of which the inner diameter and shape correspond with the shape of the longitudinal body of the quick-change arbor (12), and wherein two holes (22) are diametrically applied for connection on the cup base of the hole-saw (13).

11. Hole saw according to claim 10, whereby the inner shape of the collar shaped body (21) is round or hexagonal, and/or that the cross section of the collar shaped body is L-shaped, and/or that at the inside of the collar shaped body (21) parallel to the middle axis a groove is applied over the whole thickness of the collar shaped body.

12. Hole saw according to claim 10 or 11, **characterised in that** the adapter (23) is mounted at the inside or at the outside of the cup base (1b).

13. Combination of a quick-change arbor (12) according to one of the claims 1-8, and a hole-saw (13) according to one of the claims 9-11.

## Patentansprüche

1. Schnellwechseldorn (12) für eine Lochsäge (13), umfassend einen Körper (6), der an einem Ende mit einer Antriebsachse (11) zum Einführen in ein Bohrfutter versehen ist, wobei der Körper an seinem entgegengesetzten Ende mit Mitteln versehen ist, um die Lochsäge zu befestigen, und wobei der Körper (6) über seine Längslänge eine hauptsächlich konstante Form aufweist, sodass eine Lochsäge entlang dem Längskörper verschoben werden kann, wobei der Körper (6) mit ersten (7) und zweiten Mitteln (7, 8) ausgestattet ist, um die Lochsäge mindestens in der Nähe des entgegengesetzten Endes des Körpers (6) entsprechend rotierend und axial zu befestigen, wobei mindestens die zweiten Mittel auf solche Art und Weise betriebsfähig sind, dass sie von einer axialen Sperrstellung der Lochsäge in eine axial entriegelte Stellung der Lochsäge bewegt werden können, um das Verschieben einer Lochsäge über den Körper des Schnellwechseldorns zu ermöglichen, **dadurch gekennzeichnet, dass** der Körper (6) des Schnellwechseldorns (12) über fast seine gesamte Länge mit einer Längsnut ausgestattet ist, und dass die ersten und zweiten Mittel aus einem Riegel (7) bestehen, der in der Nut befestigt und elastisch radial zur Außenseite vorgespannt ist, und dass der Riegel (7) mit einer Kerbe (8) versehen ist.

2. Schnellwechseldorn nach Anspruch 1, **dadurch gekennzeichnet, dass** der Riegel (7) in der Nut um eine Achse (10) in der Nut nahe dem ersten Ende des Längskörpers des Schnellwechseldorns drehbar befestigt ist und durch ein elastisches Element (15) radial zur Außenseite gedrängt wird.

3. Schnellwechseldorn nach Anspruch 1, **dadurch gekennzeichnet, dass** der Riegel (7) aus einem elastischen Element besteht, das in der Nut des Körpers des Schnellwechseldorns befestigt ist.

4. Schnellwechseldorn nach einem der Ansprüche 1 bis 3, **dadurch gekennzeichnet, dass** das Ende des Riegels (7) auf beiden Seiten der Kerbe (8) abgeschrägt (8a, 8b) ist.

5. Schnellwechseldorn nach einem der Ansprüche 1 bis 4, **dadurch gekennzeichnet, dass** die Unterseite des Riegels (7) vollständig oder teilweise abgeschrägt (7a) ist.

6. Schnellwechseldorn nach einem der Ansprüche 1 bis 5, **dadurch gekennzeichnet, dass** der Riegel (7) in der Nut im Längskörper des Schnellwechseldorns auf solche Art und Weise befestigt ist, dass er im Längskörper (6) des Schnellwechseldorns unter dem Einfluss einer radial achsgerichteten Kraft vollständig versenkt ist, und ohne dass solch eine Kraft auf den Riegel ausgeübt wird, mindestens um die Kerbe (8) herum von der Nut zur axialen Verriegelung einer Lochsäge, die im Gebrauch auf dem Schnellwechseldorn (12) angeordnet wird, hervorsteht.

7. Schnellwechseldorn nach einem der vorstehenden Ansprüche, **dadurch gekennzeichnet, dass** der Längskörper (6) des Schnellwechseldorns mit Anschlagmitteln (9, 9a, 9b) versehen ist, welche die Schiebbewegung einer Lochsäge über den Längskörper des Schnellwechseldorns zur Antriebswelle begrenzen.

8. Schnellwechseldorn nach vorstehendem Anspruch, **dadurch gekennzeichnet, dass** der Stoppmechanismus durch einen Klemmring und bevorzugt einen Haltering oder eine Sicherungsscheibe gebildet ist, der in einer Nut nahe dem ersten Ende des Längskörpers (6) des Schnellwechseldorns vorgesehen ist.

9. Lochsäge (13) zur Verwendung mit einem Schnellwechseldorn (12) nach einem der vorstehenden Ansprüche, die aus einem hauptsächlich zylindrischen becherförmigen Körper besteht, der mit einem längs gerichteten zylinderförmigen Gehäuse (1a) und einem Napfboden (1b) versehen ist, der mit einem Mittelloch versehen ist, das der Form des Körpers (6) des Schnellwechseldorns (12) entspricht, sodass es passend über den Schnellwechseldorn geschoben werden kann, und einem Flansch (2), dessen innere Form der zentralen Durchgangsbohrung im Napfboden (1b) entspricht, wobei der Flansch (2) mittig auf oder durch den Napfboden befestigt ist, **dadurch gekennzeichnet, dass** die Form des Mittellochs und die innere Form des Flansches (2) rund, halbrund, dreieckig, quadratisch, fünfeckig oder hexagonal sind und ein passend lineares Verschieben des Flansches (2) über den Schnellwechseldorn (12) ermöglichen, dass der Flansch (2) an der Innenseite mit einer Nut (3) versehen ist, wobei sich die Nut (3) über die gesamte Länge des Flansches (2) in einer zum Napfboden (1b) senkrechten Richtung erstreckt, und dass der Napfboden (1b) mit einer Kerbe (4) am Ort der Nut (3) versehen ist, wobei die Kerbe (4) geeignet ist, mit Mitteln am Schnellwechseldorn (12) zusammenzuwirken, um die Lochsäge (13) gegen Bewegung zu befestigen.

10. Lochsäge nach Anspruch 9, die einen Adapter (23) umfasst, der aus einem kragenförmigen Körper (21) besteht, dessen Innendurchmesser und dessen Form der Form des Längskörpers des Schnellwechseldorns (12) entsprechen, und wobei zwei Löcher (22) zur Verbindung am Napfboden der Lochsäge (13) diametral angewandt werden.

11. Lochsäge nach Anspruch 10, wobei die innere Form des kragenförmigen Körpers (21) rund oder hexagonal ist, und/oder dass der Querschnitt des kragenförmigen Körpers L-förmig ist, und/oder dass auf der Innenseite des kragenförmigen Körpers (21) parallel zur mittleren Achse eine Nut über die gesamte Dicke des kragenförmigen Körpers aufgebracht ist.

12. Lochsäge nach Anspruch 10 oder 11, **dadurch gekennzeichnet, dass** der Adapter (23) an der Innenseite oder an der Außenseite des Napfbodens (1b) befestigt ist.

13. Kombination eines Schnellwechseldorns (12) nach einem der Ansprüche 1 bis 8 und einer Lochsäge (13) nach einem der Ansprüche 9 bis 11.

## Revendications

1. Arbre de changement rapide (12) pour une scie-cloche (13) comprenant un corps (6) dont une extrémité est dotée d'un arbre d'entraînement (11) destiné à être inséré dans un mandrin de perçage, le corps étant doté d'un moyen permettant de fixer la scie-cloche à son extrémité opposée, le corps (6) présentant une forme essentiellement constante sur l'ensemble de sa longueur, de sorte qu'une scie-cloche peut glisser le long de la longueur du corps longitudinal, ledit corps (6) étant doté de premiers (7) et de deuxièmes moyens (7, 8) permettant de fixer la scie-cloche au moins à proximité de ladite extrémité opposée au corps (6) de façon rotative et axiale respectivement, dans lequel au moins les deuxièmes moyens peuvent être actionnés de manière à pouvoir se déplacer à partir d'une position de verrouillage axial de la scie-cloche vers une position de déverrouillage axial de la scie-cloche, pour permettre le glissement d'une scie-cloche sur le corps de l'arbre de changement rapide, **caractérisé en ce que** le corps (6) de l'arbre de changement rapide (12) est doté d'une rainure longitudinale sur quasiment toute sa longueur, et **en ce que** lesdits premiers et deuxièmes moyens consistent en un verrou (7) monté dans ladite rainure en étant incliné élastiquement radialement vers l'extérieur, et **en ce que** ledit verrou (7) est doté d'une entaille (8).

2. Arbre de changement rapide selon la revendication 1, **caractérisé en ce que** le verrou (7) est monté de façon rotative dans la rainure autour d'un axe (10) dans la rainure à proximité de la première extrémité du corps longitudinal de l'arbre de changement rapide, et est forcé radialement vers l'extérieur par un élément élastique (15).

3. Arbre de changement rapide selon la revendication 1, **caractérisé en ce que** le verrou (7) consiste en un élément élastique monté dans la rainure du corps de l'arbre de changement rapide.

4. Arbre de changement rapide selon l'une des revendications 1 à 3, **caractérisé en ce que** l'extrémité du verrou (7) est chanfreinée (8a, 8b) de chaque côté de l'entaille (8).

5. Arbre de changement rapide selon l'une des revendications 1 à 4, **caractérisé en ce que** le côté inférieur du verrou (7) est entièrement ou partiellement chanfreiné (7a).

6. Arbre de changement rapide selon l'une des revendications 1 à 5, **caractérisé en ce que** le verrou (7) est monté dans le corps longitudinal de l'arbre de changement rapide de manière à s'introduire complètement dans le corps longitudinal (6) de l'arbre de changement rapide sous l'influence d'une force dirigée radialement, et, sans qu'une telle force ne s'exerce sur le verrou, au moins autour de l'entaille (8), à faire saillie à partir de la rainure pour le verrouillage axial d'une scie-cloche en service placée sur l'arbre de changement rapide (12).

7. Arbre de changement rapide selon l'une des revendications précédentes, **caractérisé en ce que** le corps longitudinal (6) de l'arbre de changement rapide est doté de moyens d'arrêt (9, 9a, 9b) limitant le mouvement de glissement d'une scie-cloche sur le corps longitudinal de l'arbre de changement rapide en direction de l'arbre d'entraînement.

8. Arbre de changement rapide selon la revendication précédente, **caractérisé en ce que** le mécanisme d'arrêt est constitué d'une bague de serrage, de préférence d'une bague de retenue ou d'un circlip, appliquée dans une rainure à proximité de la première extrémité du corps longitudinal (6) de l'arbre de changement rapide.

9. Scie-cloche (13) destinée à être utilisée avec un arbre de changement rapide (12) selon l'une des revendications précédentes, consistant en un corps en forme de coupelle essentiellement cylindrique, avec un corps cylindrique longitudinal (1a) et une base de coupelle (1b) dotée d'un trou central correspondant à la forme du corps (6) de l'arbre de changement rapide (12), de manière à pouvoir être glissée de façon ajustée sur l'arbre de changement rapide, et un rebord (2) dont la forme intérieure correspond au trou de passage central dans la base de coupelle (1b), ledit rebord (2) étant monté de façon centrale sur ou à travers la base de coupelle, **caractérisée en ce que** la forme du trou central et la forme intérieure du rebord (2) sont rondes, semi-circulaires, triangulaires, carrées, pentagonales ou hexagonales, et permettent au rebord (2) de glisser de façon linéaire et ajustée sur l'arbre de changement rapide (12), **en ce que** le rebord (2) est doté d'une rainure (3) du côté intérieur, la rainure (3) s'étendant sur toute la longueur du rebord (2) dans une direction perpendiculaire à la base de coupelle (1b), et **en ce que** la base de coupelle (1b) est dotée d'une entaille (4) à l'emplacement de la rainure (3), l'entaille (4) étant adaptée pour coopérer avec des moyens sur l'arbre de changement rapide (12) pour empêcher le mouvement de la scie-cloche (13).

10. Scie-cloche selon la revendication 9, comprenant un adaptateur (23) consistant en un corps en forme de collet (21) dont le diamètre intérieur et la forme correspondent à la forme du corps longitudinal de l'arbre de changement rapide, et dans lequel deux trous (22) sont appliqués diamétralement pour le raccordement sur la base de coupelle de la scie-cloche (13).

11. Scie-cloche selon la revendication 10, dans laquelle la forme intérieure du corps en forme de collet (21) est ronde ou hexagonale, et/ou dans laquelle la section transversale du corps en forme de collet présente une forme en L, et/ou dans laquelle, du côté intérieur du corps en forme de collet (21) une rainure est appliquée parallèlement à l'axe médian sur toute l'épaisseur du corps en forme de collet.

12. Scie-cloche selon la revendication 10 ou 11, **caractérisée en ce que** l'adaptateur (23) est monté sur le côté intérieur ou sur le côté extérieur de la base de coupelle (1b).

13. Combinaison d'un arbre de changement rapide (12) selon l'une des revendications 1 à 8 et d'une scie-cloche (13) selon l'une des revendications 9 à 11.
